# EUROPEAN PATENT APPLICATION

(11) **EP 3 693 908 A1**
(43) Date of publication of application: **12.08.2020**
(21) Application number: 20155814.5
(22) Date of filing: 06.02.2020
(51) Int. Cl.: G06Q 10/10

(54) **SYSTEM AND METHOD FOR FUTURE ELECTRONIC CONTENT TRANSMISSION**

(30) Priority: 08.02.2019 US 201916270925
(71) Applicant: Ohmann, Maria Cristina, Delray Beach, FL 33445 (US); Guilarte, Pamela, Miami, FL 33143 (US)
(72) Inventor: Ohmann, Maria Cristina, Delray Beach, FL 33445 (US); Guilarte, Pamela, Miami, FL 33143 (US)
(74) Representative: Klang, Alexander H.

(57) **Abstract**

A system and corresponding method for transmitting future electronic content to an intended recipient. The system comprises providing a device(s) operatively configured with a data network, and a user interface operatively linked to the device(s). The user interface is structured to obtain personal information from a main user. The user interface is also configured to interpret the personal information and create an electronic content database comprising at least a first electronic content element(s). The user interface is configured to implement a transmission scheme of the electronic content element(s) upon the occurrence of a future condition.

## Description

### BACKGROUND OF THE INVENTION

### Field of the Invention

The present invention relates to a system and method for creating and transmitting electronic content to an intended recipient in the future.

### DESCRIPTION OF THE RELATED ART

Various platforms for electronic content sharing currently exist. Such known platforms generally allow a user to post or otherwise upload electronic content, which may be immediately accessible to a group of other users. Such users generally have to be selected or otherwise approved before they may view the posted electronic content. Examples of such electronic content sharing platforms include Facebook®, YouTube®, Instagram®, Twitter®, and various others. In addition to the foregoing, some devices are believed to exist which facilitate or otherwise enable electronic content sharing. Such devices include mobile devices such as telephones, tablets, laptop computers, and other types of devices including desktop computers. None of the existing devices or platforms, however, are believed to provide truly comprehensive forms of electronic content transmission. Generally, existing platforms limit electronic content sharing to a predetermined list of "known" users which have to be accepted by another user before being able to access electronic content. Further, a user's ability to create content is generally limited to creating present electronic content. Thus, the ability of an individual to create electronic content for future access and/or transmission is similarly limited.

The industry would benefit from a system and corresponding method of creating and transmitting electronic content that would overcome the previous limitations. It would be beneficial to provide a system and corresponding method that is capable of obtaining personal information from a user and creating electronic content for future transmission.

A further benefit would be realized by providing a system and method that would be accessible to various future users that may assist an initial user in creating and/or transmitting electronic content well into in the future, even after the death of the user that provided the original personal information. Yet a further benefit would be realized by providing a system and corresponding method also capable of assigning a future intended recipient to the electronic content.

### SUMMARY OF THE INVENTION

### A. Overview of System

The present invention is directed to a system that enables a user to create electronic content for future transmission. The inventive system generally comprises at least one device operatively configured with a data network. The device may be accessed and/or operated by a user(s), which may be a main user, an intended recipient, or a third-party intermediary. The device may comprise various devices suitable for accessing electronic content, including, but not limited to, a mobile device, a laptop computer, a tablet, a portable computer, a wearable electronic device, a desktop or other similar computer, or any other suitable device or combination of circuits that may enable the operative features described herein. The device(s) may be disposed in operative communication with a data network, or alternatively, directly with another device. Such an operative communication may be facilitated or otherwise enabled over various suitable wired and/or wireless mediums or any combination thereof.

A user(s) may access the operative features of the present invention through a user interface operatively linked to a device, to create electronic content for future transmission. The user interface may comprise an application that may be accessed via the device(s). Alternatively, the user interface may comprise a web or mobile browser that enables user communication and/or visualization of information. Generally, the user interface is configured to obtain and interpret personal information from the user(s). The user interface may be implemented via any number of written, programmable, and/or interpretable computer languages capable of obtaining and/or interpreting the personal information provided by the user.

Generally, a main user and/or third-party intermediary may access the user interface to provide their own personal information, or personal information relating to a different individual(s). Examples of personal information include the user's age, birthday, marital status; number, name, and age of the main user's children, the children's relationship status, the name of the children's spouse or significant other, children's occupation, expected graduation dates, anniversary, birthday, and other personal information. The personal information may also comprise personal information relating to another individual, such as, but not limited to, information relating to the user's spouse, parents, grandparents, nieces, nephews, cousins, and other relatives, or other individuals such as friends, co-workers, colleagues, acquaintances, extended family, etc.

The user interface is generally configured to interpret the personal information and create an electronic content database, which includes at least one electronic content element. The user interface may automatically create an electronic content element based on the specific personal information provided by the user(s). The electronic content element(s) may be a greeting, a wish, life advice, or any other message for the intended recipient(s). Alternatively, the user(s) may also have the option to directly create an electronic content element(s). Generally, the user interface is configured to associate a particular individual, which may be an intended recipient, with the specific personal information provided by the main user, and more specifically with a particular electronic content element(s). More specifically, the user interface may be configured to automatically associate an intended recipient and/or third-party intermediary with a specific electronic content element(s). Alternatively, a user may manually assign an intended recipient(s) to a specific electronic content element.

The user interphase may comprise a platform that may be used to create visual electronic content. More specifically a platform may be configured to create an electronic content element(s) with graphical properties, including various backgrounds. The electronic content element(s) may comprise video. Other graphical properties may comprise customizable backgrounds, fonts, pictures, images, and illustrations. Further, the platform should also give the user the ability to record audio, or otherwise incorporate already existing audio files to the electronic content element(s). Moreover, the platform of the user interface may also give the user the ability to create new, or incorporate existing, video content to the electronic content element(s). The electronic content element(s) may be transmitted in a variety of electronic media which may be viewable from the device(s), including, but not limited to, a written message, visual message, video, sound recording, or combinations thereof.

The user interface may be configured to create electronic content based on personal information that is "known" at the time that a user(s) accesses the user interface. An electronic content database, comprising at least one electronic content element, may be created based on such personal information. The electronic content database may be stored locally within internal memory capabilities of the device(s), on an application server, and/or over the data network. The electronic content element(s) may be transmitted upon the occurrence of a "future condition". The electronic content element(s) may also be transmitted at a predetermined date in the future. It is also possible that at least some personal information will be "unknown" at the time that the user(s) accesses the user interface. Such "unknown" personal information may comprise any future "unknown" date or event associated with an individual. Thus, a user(s) should be able to access the user interface to provide information relating to such a potential "unknown" future date or event. The user interface may interpret such information relating to the "unknown" future event to create electronic content for transmission in the future.

The user interface may also interpret the personal information relating to the "unknown" future date or event, and generate instructions for another user(s) to create electronic content. Further, the instructions may indicate what individual(s), or intended recipient, should be associated with the specific electronic content. Such instructions may be stored on the electronic content database, over the data network, or directly on the device(s), and may be transmitted to the third-party intermediary and/or the intended recipient in the future. In at least one embodiment, the instructions may be transmitted to another user(s) upon the occurrence of a "future condition". As used herein, a "future condition" may comprise a personal event of a user, including a personal event of the main user, the intended recipient, and/or the third-party intermediary. The future condition may also comprise a personal event that is presently "known".

Even additional features of the present invention comprise incorporating executable code to implement a transmission scheme of electronic content. A transmission scheme may be implemented upon the occurrence of a future condition, which may be a "known" personal event, or a "known" future date. The transmission scheme may be implemented using various email functions, including, but not limited to, the ability to set email aliases, forwarding emails, etc. The transmission scheme may also be implemented via mail transfer agents (MTA), mail delivery agents (MDA), and other computer software for providing email or message handling services. The transmission scheme may also be implemented by other transmission mechanisms, such as, but not limited to electronic messaging and text messaging.

Instructions for subsequent user(s), such as a third-party intermediary, may be directly created by the main or initial user(s). Alternatively, the user interface may be configured to interpret already provided personal information to generate and/or suggest predetermined instructions. Such suggested instructions may be accepted or rejected by the main or initial user(s). In at least one embodiment, the subsequent user(s) may be a third-party intermediary. Thus, the subsequent user(s) may receive a notification to access the user interface to retrieve, view, or otherwise access such instructions. The notification may be sent to the subsequent user(s) at a "set" date in the future. After accessing or otherwise retrieving the instructions, the subsequent user(s) may also have the ability to view the personal information originally provided by the main or initial user(s). Thereafter, the subsequent user(s) may be given the option to create electronic content for the intended recipient(s). Alternatively, the subsequent user(s) may decline the invitation to create electronic content. Instead the subsequent user(s) may be given the option to select a different user(s) of his/her choice that will receive a notification to access the user interface.

### B. Overview of Method

The present invention is also directed towards a method of transmitting future electronic content to an intended recipient. The method generally comprises using a user interface operatively linked with a device(s) to obtain and interpret personal information provided by a user(s). The method also comprises creating an electronic content database comprising at least a first electronic content element based on the user interface's interpretation of the personal information. Alternatively, a user may manually create the electronic content element(s). The method further comprises implementing a transmission scheme of the electronic content element(s) upon the occurrence of a future condition. Implementing a transmission scheme of the electronic content element(s) may comprise encrypting, and subsequently decrypting, the electronic content element(s). Various encryption and/or message security features may be implemented, including different mechanisms that may prevent or otherwise block transmission of the electronic content. Decryption of the electronic content element(s) may be achieved upon a successful user authentication, or alternatively upon the occurrence of a future condition. In one embodiment, the transmission scheme may be implemented upon the occurrence of an "unknown" future event.

Further features of the method comprise creating an electronic content database comprising instructions for creating electronic content. A transmission scheme of the electronic content element(s) and the instructions to a subsequent user(s) may be implemented upon the occurrence of a future condition. Alternatively, a transmission scheme may be implemented comprising transmission of only the instructions for the subsequent user(s). The method may further comprise using the user interface to transmit the instructions to a third-party intermediary. Further, the method may comprise using the user interface to obtain and interpret personal information from the third-party intermediary, to create at least a second electronic content element. Implementing the transmission scheme may also comprise transmitting the at least second electronic content element to an intended recipient.

### BRIEF DESCRIPTION OF THE DRAWINGS

For a fuller understanding of the nature of the present invention, reference should be had to the following detailed description taken in connection with the accompanying drawings in which:
Figure 1 is a diagrammatic representation of an illustrative embodiment of a system according to the present invention for transmitting electronic content.
Figure 2 is a diagrammatic representation of another illustrative embodiment of a system according to the present invention for transmitting electronic content comprising two devices and two user interfaces.
Figure 3 is a diagrammatic representation of yet another illustrative embodiment of a system according to the present invention for transmitting electronic content comprising three devices and three user interfaces.
Figure 4 is a diagrammatic representation of an alternative embodiment of a system according to the present invention comprising a device operatively linked to a user interface and a data network, and a second device operatively linked to the first device.
Figure 5 is a flowchart representative of one illustrative embodiment of a method according to the present invention for transmitting future electronic content.
Figure 6 is a flowchart representative of another illustrative embodiment of a method according to the present invention for transmitting future electronic content, comprising encrypting and subsequently decrypting an electronic content element.
Figure 7 is a flowchart representative of yet another illustrative embodiment of a method according to the present invention for transmitting future electronic content, comprising encrypting and subsequently decrypting an electronic content element upon the occurrence of a future condition.
Figure 8 is a flowchart representative of another illustrative embodiment of a method according to the present invention for transmitting future electronic content, comprising obtaining information from a third-party intermediary, and creating and transmitting at least a second electronic content element to an intended recipient.

### DETAILED DESCRIPTION

As schematically represented in the accompanying drawings, the present invention is generally directed to a system and corresponding method for transmitting future electronic content to an intended recipient.

### A. Overview of System

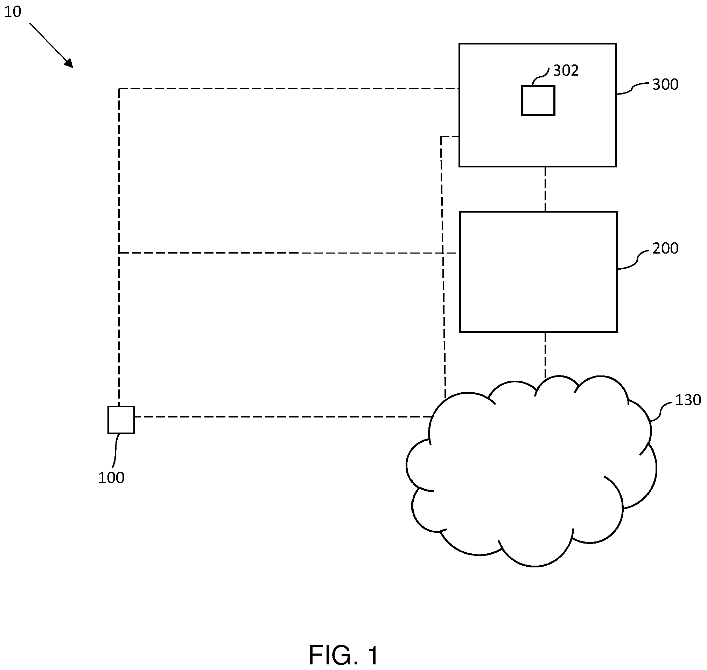

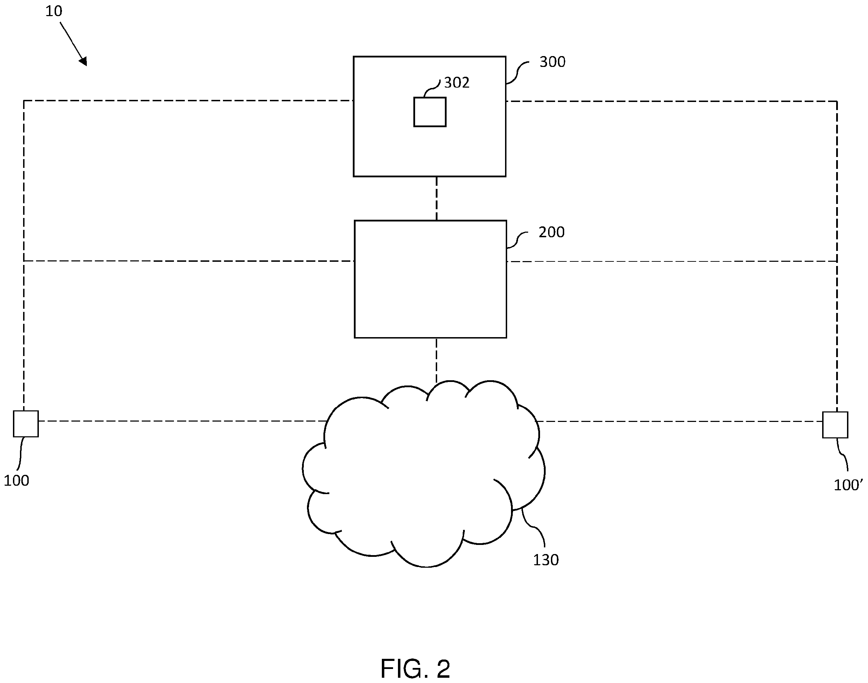

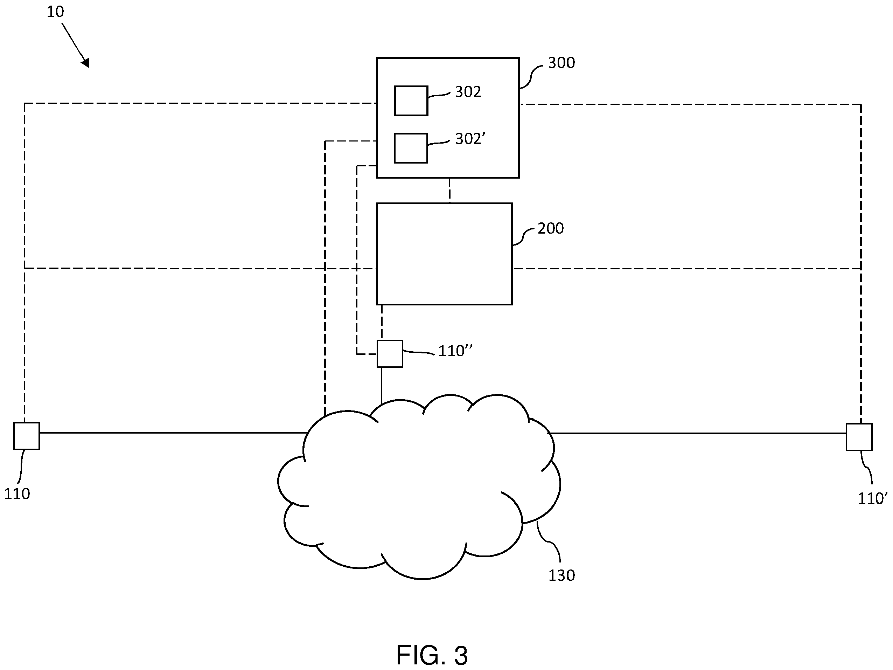

The present invention is directed to a system 10 configured to enable a user to create electronic content that may be transmitted in the future. In one embodiment, the system 10 of the present invention may be implemented as is generally represented in Figure 1. Thus, the system 10 according to the present invention generally comprises at least one device 100 operatively configured with a data network 130. The device 100 is configured for access and/or operation by a user(s). As will be explained hereinafter, the user(s) may be a main user, an intended recipient of future electronic content, or a third-party intermediary. It is within the scope of the present invention that various devices may be provided, such as 100, 100' and/or 100", for access by the different types of users. Accordingly, the system 10 may further comprise additional devices, shown at 100' in Figures 2-3, and 100" in Figure 3, which are configured for access, respectively by the intended recipient and/or the third-party intermediary. However, multiple devices are not strictly necessary a single device may be configured for access and/or operation by the various types of users. The device 100, 100', and/or 100" may comprise a device(s) for remote access such as, but not limited to, a mobile device, laptop computer, a tablet, a portable computer, or a wearable electronic device. The device 100, 100', and/or 100" may also comprise a desktop or other similar computer, or any other device or combination of circuits structured and configured to communicate with another device, computer, server, or data network. The system 10 according to the present invention may comprise software on a chip embedded or integrated into the device 100, 100', and/or 100", to perform the functionalities described herein.

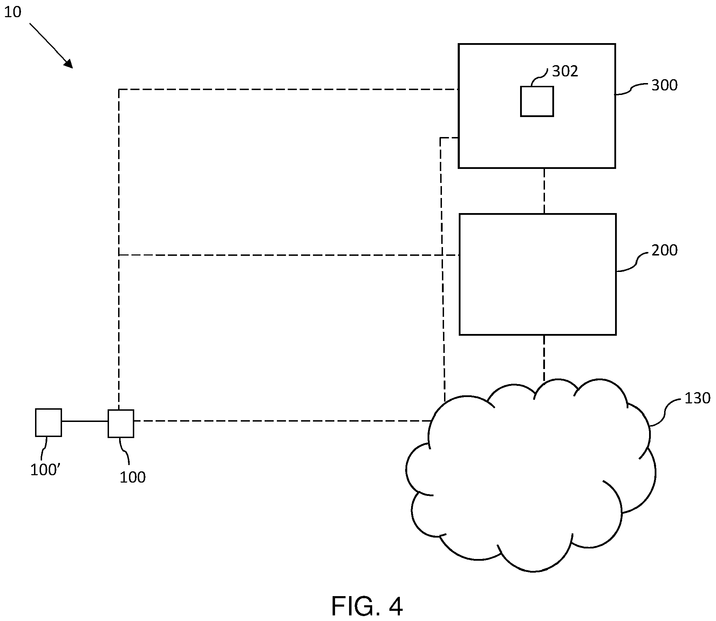

As shown in Figures 1-4, the data network 130 of the system 10 according to the present invention may be operatively configured with at least one device 100, 100', and/or 100". Each device 100, 100', and/or 100", may be disposed in operative communication either directly with each other, or with the data network 130. The illustrative embodiment as shown in Figure 4, shows a device 100' disposed in direct operative communication with another device 100. In the illustrative embodiment as shown in Figure 4, only the device 100 is operatively connected to a user interface 200. Such operative communication between devices and/or the data network 130 may be enabled via LAN, WAN, Serial, Z-WAVE, ZIGBEE, RS-485, MODBUS, BACNET, the Internet, or combinations thereof. An operative communication between two or more device(s) 100, 100', and/or 100", and/or with the data network 130, may be facilitated over various wired and/or wireless mediums or any combination thereof including interconnections by routers and/or gateways. The data network 130 may comprise hardware components and/or additional devices suitable to facilitate and/or enable transmission of electronic content and/or communication between the various devices 100, 100', and/or 100", of the present invention. In one embodiment, electronic content may be transmitted via a content delivery network (CDN).

Although not strictly required, the system 10 according to the present invention may comprise an application server. As used herein, and application server refers to at least one computer having appropriate hardware and/or installed applications to provide server services. Such server services may include web services and/or other functional services to provide remote access to a user to remotely access a user interface 200 from a device 100, 100', and/or 100". The application server may comprise general purpose computers, specialized computers, or other hardware components structured and configured to receive, process, interpret, and/or transmit electronic content between various devices, such as 100, 100', and/or 100", or between a device(s) and the data network 130. Further, the application server may operatively configured with executable or interpretable computer code. The application server may comprise a general purpose computer comprising a central processing unit (CPU), which may be a single-core processor or a multi-core processor. The application server may also comprise memory capabilities. The memory capabilities of the application server may comprise random-access memory, read-only memory, and/or flash memory. The memory capabilities may also comprise a primary memory, which may enable high-speed storage for executing programs. The memory capabilities may also comprise an electronic storage unit (e.g., hard disk) or a secondary memory for storing data, a communications interface (e.g., network adapter) for communicating with other devices over a network, and/or peripheral device(s) in communication with the CPU that enable input/output of the application server.

The application server may implement features of the present invention via any number of software subsystems or components, also herein referred to as solution stacks. These solution stacks may include, without limitation, ZEND Server, APACHE Server, NODE.JS, ASP, PHP, Ruby, XAMPP, LAMP, WAMP, MAMP, WISA, LEAP, GLASS, LYME, LYCE, OpenStack, Ganeti, MEAN, MEEN, XRX, and other past, present, or future equivalent solution stacks, or combinations thereof. The software stack(s) might be implemented with third-party cloud platforms, or without third-party cloud platforms, for example using load balancing and virtualization software provided by Citrix, Microsoft, VMware, Map-Reduce, Google Filesystem, Xen, memory caching software such as Memcached and Membase, structured storage software such as MySQL, MariaDB, XtraDB, etc., and/or other platforms. In at least one embodiment, the solution stacks may also be deployed in cloud platforms by using known development tools and server hosting services such as GitHub and Rackspace, and their equivalents. The application server may comprise any combination of hardware and software, including code segments in any number of programmable, executable, or interpretable languages, which may be configured to host and transmit future electronic content.

As shown in Figures 1-4, further features of the system 10 according to the present invention comprise providing a user interface 200 operatively linked with the device 100, 100', and/or 100". The user interface 200 generally allows a user(s) to access and interact with configurations thereof to create electronic content for future transmission and/or delivery. The user interface 200 may be proprietary and may comprise a custom developed mobile or desktop application(s) that may be installed, operated, or otherwise accessed via the device 100, 100', and/or 100". Alternatively, or in addition to, the user interface 200 may comprise a web browser, mobile browser, or other application or executable code that enables user communication and/or visualization of information. Further, the user interface 200 may be accessible via wired LAN or WiFi connection, or via Near-Field Communication (NFC) capabilities. Generally, the user interface 200 is configured to obtain information from the user(s). The user interface 200 and/or devices 100, 100', and/or 100", may be cooperatively configured with executable or interpretable computer code to obtain, and in some embodiments also interpret, information provided the user(s). Accordingly, the user interface 200 may be implemented via a computer program, and may be written in a programmable or interpretable language, including but not limited to C, C++, C#, Ruby, Java, Dart, Rust, Swift, PHP, Perl, HTML, XHTML, and other equivalent languages, including past, present and future variations, and combinations thereof.

The user interface 200 is generally configured to obtain personal information from a user(s), which is generally a main user a/or third-party intermediary. As used herein, a "main user" refers to a user that may initially access the user interface 200, and that may provide or otherwise input information through the user interface 200. Such information may comprise personal information of the main user, which may include, but is not necessarily limited to, the main user's age, birthday, marital status; number, name, and age of the main user's children, the children's relationship status, the name of the children's spouse or significant other, children's occupation, expected graduation dates, anniversary, birthday, and other personal information, including preferences. The personal information may also comprise similar personal information relating to the main user's spouse, parents, grandparents, nieces, nephews, cousins, and other relatives, or other individuals such as friends, co-workers, colleagues, acquaintances, extended family, etc. The personal information may further comprise personal preferences of an individual, including music, books, television, films, sports, preferred geographical locations, hobbies, etc.

As is also shown in Figures 1-4, further features of the system 10 according to the present invention comprise providing a user interface 200 configured to interpret personal information to create an electronic content database 300. An electronic content element(s) 302 may be automatically created by the user interface 200 based on the specific personal information provided by the user. Alternatively, the user may be given the option to directly create a specific electronic content element(s) 302. The electronic content element(s) 302 will be transmitted in the future to the intended recipient. As used herein, an "intended recipient" refers to an individual that may be known at the time a main or initial user, or a third-party intermediary, accesses the user interface 200 to either provide personal information, or to directly create electronic content. In at least one embodiment, the "intended recipient" may not be known at the time the initial or main user, or a third-party intermediary, accesses the user interface 200. For example, an unknown "intended recipient" may be a future daughter in law that a son, of the main or initial user, has not met yet, but for which the main or initial user would like to create electronic content for future transmission, for example, after the son marries the future daughter in law. Further to the foregoing example, the future condition may comprise an event, such as the son's wedding, which may have an unknown date of occurrence. On the foregoing example, the user interface 200 may be configured to automatically interpret personal information provided by the main or initial user to create an electronic content element(s) 302. Such personal information may include the fact the main or initial user may have a child, now or in the future, which may be the intended recipient, and that the child may marry another individual in the future. The user interface 200 may also be configured to automatically transmit the electronic content element(s) 302 upon the occurrence of a future condition, which may be an event such as the wedding of the child. Thus, the electronic content element(s) 302 may comprise a variety of messages based on the personal information provided by the user. Alternatively, the electronic content element(s) 302 may be directly created by the user. Examples of such messages include greetings for certain dates associated with the intended recipient, such as, but not limited to, birthdays, graduation dates, wedding date, anniversaries, etc. Thus, the user interface 200 should generally be configured to automatically associate a particular individual, which may be the intended recipient and/or third-party intermediary, with the specific personal information provided by the main user. More specifically, the user interface 200 should be able to automatically associate an intended recipient and/or third-party intermediary with a specific electronic content element(s) 302. In at least one alternative embodiment, a user may access the user interface 200 to manually assign an intended recipient to a specific electronic content element(s) 302 that the user may create, or that is automatically created by the user interface 200.

It is within the scope of the present invention, that multiple electronic content elements 302 be created by a user. A user may create a plurality of electronic content elements 302. In at least one embodiment, such a plurality of electronic content elements 302 may collectively define an "electronic content diary". As used herein an electronic content diary may comprise multiple electronic content elements 302, intended for a recipient(s), which may be transmitted at different instances in the future. For example, a user may create a plurality of electronic content elements 302, each to be transmitted to an intended recipient every year on the recipient's birthday. As another example, a terminally ill user may create a plurality of electronic content elements 302, collectively defining a "dairy" of memories of events of the user, which may be transmitted in the future, at once or in phases, to an intended recipient. The foregoing examples of an "electronic content diary" or otherwise plurality of electronic content elements 302, are only provided for illustrative purposes, and are not intended to be exhaustive of all the possible types of combinations of electronic content elements 302 that may be achieved.

The user interphase 200 of the system 10 according to the present invention may comprise a platform that may be used to create visual electronic content. More specifically a platform may be configured to create an electronic content element(s) 302 that may include graphical properties, including various backgrounds, which may be fixed, or may alternate. In at least one embodiment, the electronic content element(s) 302 may comprise video. For example, such graphical properties may comprise customizable backgrounds, fonts, pictures, images, and illustrations. Further, the platform should also give the user the ability to record audio, or otherwise incorporate already existing audio files to the electronic content element(s) 302. Moreover, the platform of the user interface 200 may also give the user the ability to create video content, or to incorporate existing video content, to the electronic content element(s) 302. Accordingly, the electronic content element(s) 302 may be transmitted in a variety of electronic forms which may be accessed from a device(s), including through the user interface 200. Alternatively, the electronic content element(s) 302 may be accessed directly through the device(s) without the need to access the user interface 200. Thus, the electronic content viewed or otherwise accessed through various types of media compatible with an electronic device(s), including, but not limited to a written message, visual message, a video, sound recording, or combinations thereof.

It is within the scope of the present invention that some of the personal information will be "known" at the time that the main user(s) accesses the user interface 200. Accordingly, the user interface 200 may be configured to create electronic content based on such "known" personal information. Such electronic content may be more precisely defined as an electronic content database 300. The electronic content database 300 may be stored locally within the internal memory capabilities of the device 100, 100', and/or 100". The electronic content database 300 may also be stored on the application server, or on the data network 130. Thus, as shown in Figures 1-4, the electronic content database 300 may comprise at least a first electronic content element 302. The electronic content element(s) 302, may be transmitted in the future based on the occurrence of a "future condition", which will be later explained in more detail. Thus, the device 100, may be generally configured to transmit electronic content to an intended recipient and/or a third-party intermediary.

It is also possible that some personal information will be "unknown" at the time that the main user accesses the user interface 200. Non-limiting examples of such "unknown" personal information include a future date in which an individual may pass away, the date in which another individual will be born in the future, or in general, any future "unknown" date or event of an individual, which may or may not be certain to occur. Thus, it is contemplated that the main user be able to access the user interface 200 to provide or input such "unknown" personal information, which may be interpreted by the user interface 200 to create electronic content for transmission in the future. As a non-limiting example, a user may not have grandchildren when accessing the user interface 200, but it may be possible that such user have grandchildren in the future, and that there will be "unknown" future events relating to such future grandchildren, such as attending an institution, graduating, celebrating birthdays, and/or any other relevant occasions, etc.

Accordingly, the main user may provide sufficient personal information relating to such "unknown" future event, so that the user interface 200 may interpret such information to generate instructions for another, subsequent user. Such instructions may be transmitted in the future either to an intended recipient and/or a third-party intermediary, who may access the user interface 200 at a later time to create electronic content. Alternatively, the main user may access the user interface 200 to directly provide instructions for another user to create electronic content in the future. As used herein, a "third-party intermediary" may not necessarily be an intended recipient. A "third-party intermediary" may be a different individual from the intended recipient, who may assist the main user in creating and/or transmitting electronic content to the intended recipient. Alternatively, the "third-party intermediary" may also provide his or her personal information, create electronic content directly for a known or unknown intended recipient, and/or provide instructions for a subsequent "third-party intermediary" to create electronic content. Accordingly, the user interface 200 may be configured to create electronic content 200 based on the personal information provided by the third-party intermediary. Such instructions, whether provided by a user, or generated by the user interface 200, may be stored for future access and/or transmission. For example, such instructions may be stored on the electronic content database 300, on an application server, over the data network 130, or directly on the device 100, 100', and/or 100". As will also be explained hereinafter, such instructions for creating electronic content may be transmitted to the third-party intermediary and/or the intended recipient in the future. In at least one embodiment, the instructions may be transmitted to a third-party intermediary and/or the intended recipient upon the occurrence of a future condition. Further, the future condition may comprise the occurrence of an "unknown" future date or event as described herein.

A further feature of the system 10 according to the present invention includes providing a user interface 200 configured to implement a transmission scheme of the electronic content upon the occurrence of a "future condition". As used herein, the "future condition" may comprise a personal event of a user. Further, the future condition may also comprise a personal event of the intended recipient and/or the third-party intermediary. In at least one embodiment, the future condition may comprise a personal event of the third-party intermediary. The future condition may also comprise a personal event that is "known" at the time that the main user accesses the user interface 200. Such a "known" personal event may be a personal event of the main user, the intended recipient or another individual. The date of such a "known" personal event should be ascertainable from the information provided by the main user when accessing the user interface 200.

Even additional features of the present invention comprise incorporating executable code to implement a transmission scheme of electronic content. The transmission scheme may be implemented when a "known" personal event occurs. The transmission scheme may also be implemented when a future "known" date occurs. Generally, the transmission scheme comprises transmitting electronic content directly to the intended recipient upon the occurrence of a "known" future date or personal event. Alternatively, the transmission scheme may also comprise transmitting electronic content to the third-party intermediary upon the occurrence of a "known" personal event, or a "known" future date.

The transmission scheme may be implemented by conventional email functions including the ability to set email aliases, forwarding emails, etc. The transmission scheme may also be implemented via mail transfer agents (MTA), mail delivery agents (MDA), and other computer software for providing email or message handling services. In one embodiment, the electronic content element(s) 302 may be transmitted directly via email. Other transmission mechanisms include other forms of electronic messaging, including text messaging. In another embodiment, a notification may be transmitted via email or other electronic messaging to the intended recipient and/or third-party intermediary. Such a notification may comprise instructions for the intended recipient and/or third-party intermediary to access the user interface 200 and/or create electronic content.

Generally, the instructions for the third-party intermediary may be directly created by the main user. In an alternative embodiment, the user interface 200 may be configured to interpret the personal information provided by the main user and suggest predetermined instructions for a third-party intermediary. Thus, a third-party intermediary may receive a notification to access the user interface 200. This may occur at a "set" date in the future relative to the date that the user accesses the user interface 200. For example, such a "set" date may be occur in 2 years, in 5 years, in 10 years, in 20 years, or at any given future date. It is within the scope of the present invention that such a future "set" date may occur even after the death of the main user. Once a third-party-intermediary accesses the user interface 200 to view the instructions, the third-party intermediary may also be given the ability to view the personal information originally provided by the main user. Then, the third-party intermediary may be given the option to create electronic content for the intended recipient. Alternatively, the third-party intermediary may decline the invitation to create electronic content, but may be given the option to select a different third-party intermediary of his/her choice. There may be instances when a different individual would be better suited to execute the main user's instructions. Thus, an initially designated third-party-intermediary may select a different individual to execute the instructions. For example, an originally designated third-party intermediary may select the best friend of a main user's grandson as a new third-party intermediary. In this example, the grandson may be the intended recipient, while the grandson's best friend may act as the new third-party intermediary. Thus, the grandson's best friend will have the ability to access the user interface 200 to execute the user's instructions, which may involve creating and/or insuring transmission of an electronic content element(s) 302 to the intended recipient.

### B. Overview of Method

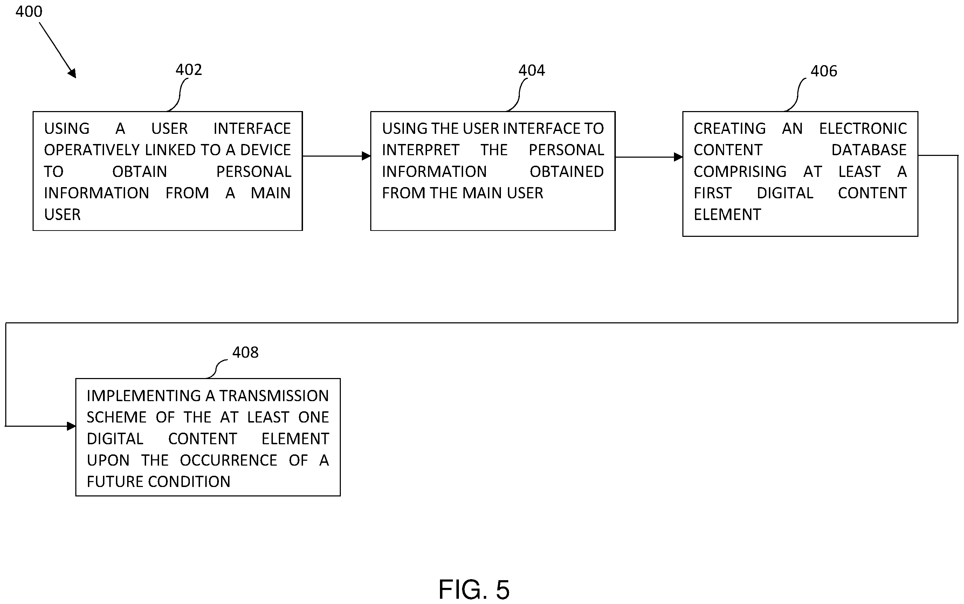

With reference to Figures 5-8, the present invention is also directed towards a method 400 of transmitting future electronic content to an intended recipient. As is shown at 402 in Figures 4-8, the method 400 according to the present invention generally comprises using a user interface 200 operatively linked with a device 100, 100', and/or 100" to obtain personal information from a user(s). The user(s) may be a main user(s), and/or a third-party intermediary. As is shown at 404, the method 400 of the present invention further comprises using the user interface 200 to interpret personal information obtained from the user(s). Indicated as 406, the method 100 also generally comprises creating an electronic content database 300 comprising at least a first electronic content element 302. In at least one embodiment, the method 100 comprises storing personal information and/or the electronic content(s) 302 on the "application server." As is indicated as 408, the method 100 according to the present invention further comprises implementing a transmission scheme of the at least one electronic content element 302 upon the occurrence of a future condition.

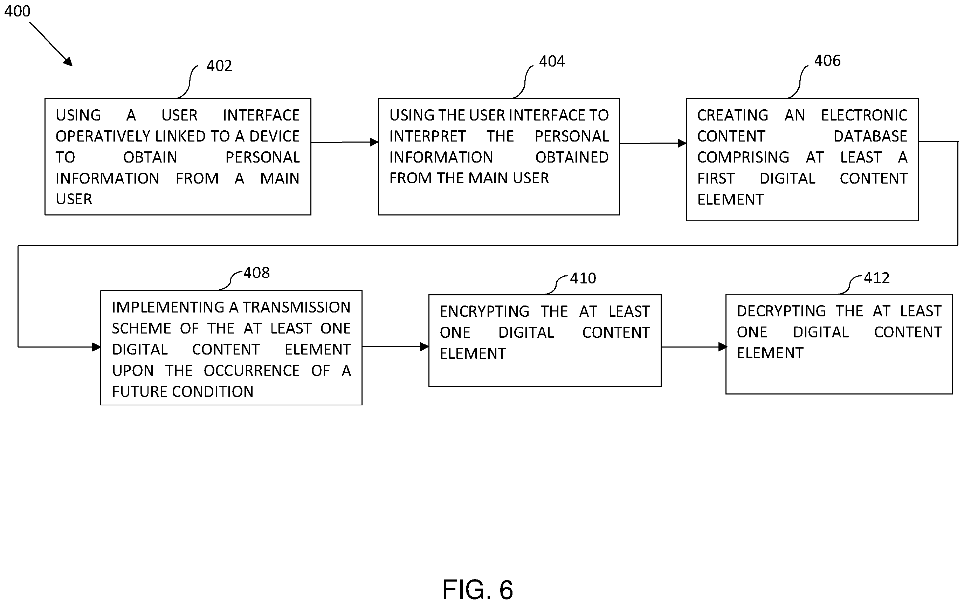

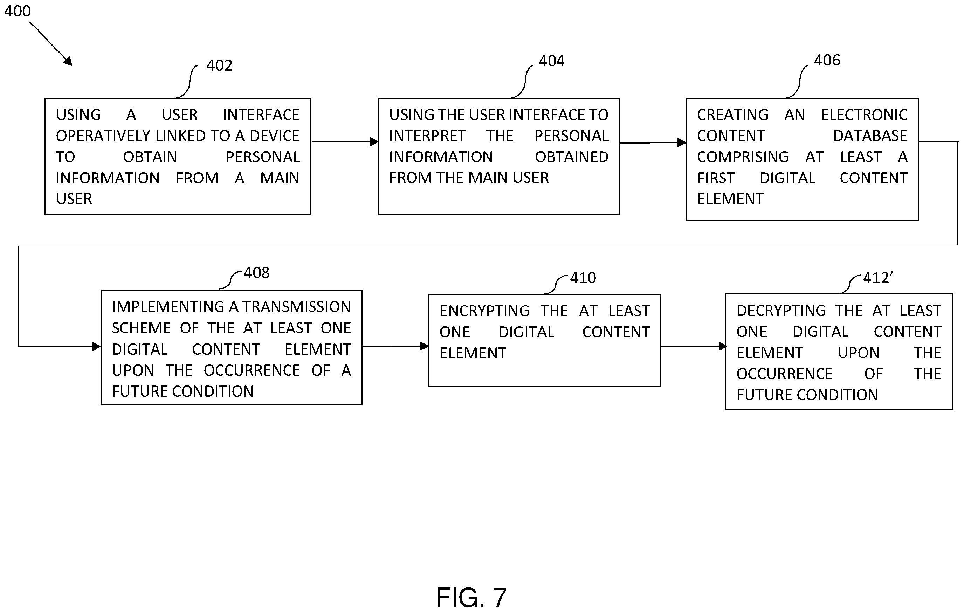

With reference now to Figures 6 and 7, and as indicated as 410, implementing a transmission scheme may comprise encrypting the electronic content element(s) 302. As is shown at 412 in Figure 6, implementing the transmission scheme may further comprise decrypting the at least one electronic content element(s) 302. It is within the scope of the present invention that various encryption and/or message security features be implemented. These may comprise various mechanisms that may prevent or otherwise block transmission of the electronic content unless a successful authentication is achieved or enabled. Successful decryption of the electronic content element(s) 302 may be enabled upon a successful authentication of the user(s), or alternatively upon the occurrence of the future condition, as described herein. For example, a main user may designate a date in the future in which the electronic content element(s) 302 may be automatically decrypted, making the electronic content element(s) 302 accessible to the intended recipient and/or third-party intermediary. As is shown at 412' in Figure 7, implementing the transmission scheme may further comprise decrypting the at least one electronic content element(s) 302 upon the occurrence of the future condition. In one embodiment, the occurrence of such a future condition may comprise the occurrence of an unknown future event as described herein.

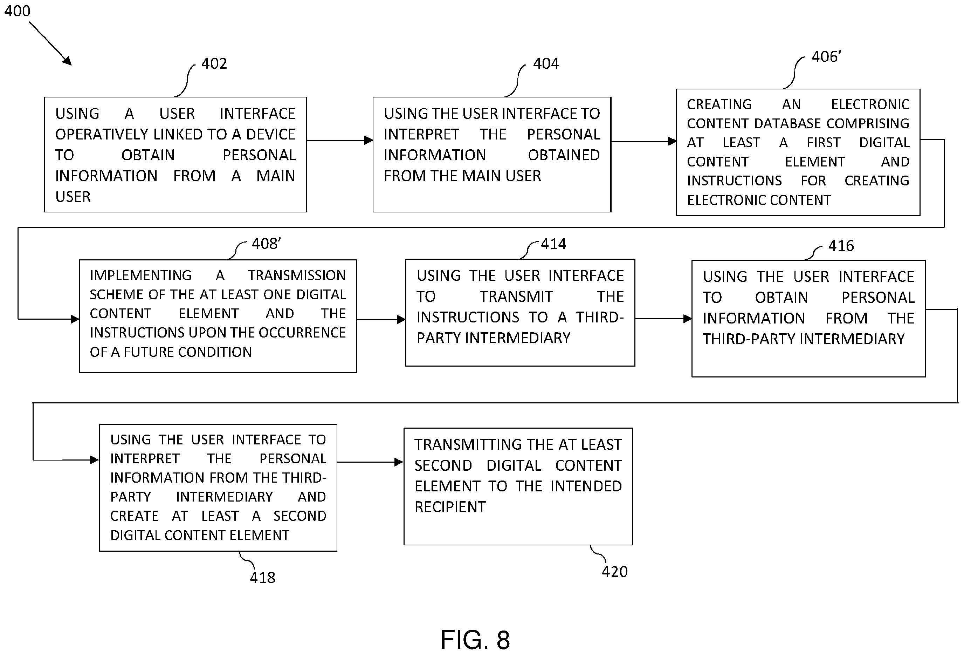

With reference to Figure 8, and as shown at 406', further features of the method 100 according to the present invention comprise creating an electronic content database 302 comprising at least a first electronic content element 302, and instructions for creating electronic content. Also in Figure 8, and shown at 408', the method 100 of the present invention may comprise implementing a transmission scheme, of the electronic content element(s) 302 and the instructions, upon the occurrence of a future condition. In an alternative embodiment, the method 100 comprises creating an electronic database 300 comprising only the instructions for creating electronic content. This may be achieved with or without using the user interface 200 to obtain and/or interpret personal information from the main user. With reference again to Figure 8, and as shown at 414, the method 100 may further comprise using the user interface 200 to transmit the instructions to a third-party intermediary. As shown at 416, the method 100 may further comprise using the user interface 416 to obtain personal information from the third-party intermediary. Further, as shown at 418, the method 100 may comprise using the user interface 200 to interpret the personal information of the third-party intermediary to create at least a second electronic content element 302'. As shown at 420, implementing the transmission scheme may comprise, transmitting the at least second electronic content element 302' to an intended recipient.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention should be determined by the appended claims and their legal equivalents.

### FURTHER SUMMARY OF THE INVENTION

1. A system for transmitting future electronic content to an intended recipient, said system comprising:
   at least device operatively configured with a data network,
   a user interface operatively linked to said at least one device,
   said user interface configured to allow access to a main user to create at least a first electronic content element,
   said user interface configured to implement a transmission scheme of said at least first electronic content element based upon the occurrence of a future condition.
2. The system as recited in 1 wherein said future condition comprises a personal event of the main user.
3. The system as recited in 1 wherein said future condition comprises a personal event of the intended recipient.
4. The system as recited in 1 wherein said future condition comprises the occurrence of a known future event.
5. The system as recited in 1 wherein said future condition comprises the occurrence of a known future date.
6. The system as recited in 1 wherein said future condition comprises the occurrence of an unknown future event.
7. A system for transmitting future electronic content to an intended recipient, said system comprising:
   at least one device operatively configured with a data network,
   a user interface operatively linked to said at least one device and structured to obtain personal information from a main user,
   said user interface configured to interpret the personal information of the main user and create an electronic content database comprising at least a first electronic content element, and
   said user interface configured to implement a transmission scheme of said at least first electronic content element upon the occurrence of a future condition.
8. The system as recited in 7 wherein said electronic content database comprises instructions for creating electronic content.
9. The system as recited in 8 wherein said transmission scheme comprising said user interface being configured to transmit said instructions for creating electronic content to a third-party intermediary.
10. The system as recited in 9 wherein said user interface is structured to obtain personal information from the third-party intermediary.
11. The system as recited in 10 wherein said user interface is structured to interpret the personal information from the third-party intermediary; said electronic content database structured to include at least a second electronic content element.
12. The system as recited in 11 wherein said transmission scheme comprises transmitting said at least second electronic content element to the intended recipient.
13. A method for transmitting future electronic content to an intended recipient, the method comprising:
   using a user interface operatively linked to at least one device to obtain and interpret personal information from a main user,
   using the user interface to interpret the personal information obtained from the main user, creating an electronic content database comprising at least a first electronic content element, and
   implementing a transmission scheme of the at least first electronic content element upon the occurrence of a future condition.
14. The method as recited in 13 wherein implementing the transmission scheme comprises initially encrypting the at least first electronic content element, and subsequently decrypting the at least first electronic content element.
15. The method as recited in 14 wherein implementing the transmission scheme comprises subsequently decrypting the at least first electronic content element upon the occurrence of the future condition.
16. The method as recited in 13 further comprising implementing the transmission scheme upon the occurrence of an unknown future event.
17. The method as recited in 16 further comprising creating an electronic content database comprising instructions for creating electronic content.
18. The method as recited in 17 wherein the transmission scheme comprises using the user interface to transmit the instructions for creating electronic content to a third-party intermediary.
19. The method as recited in 18 further comprising using the user interface to obtain personal information from the third-party intermediary.
20. The method as recited in 19 further comprising using the user interface to interpret the personal information from the third-party intermediary and create at least a second electronic content element; the electronic content database structured to include the at least second electronic content element; transmitting the at least second electronic content element to the intended recipient.

## Claims

1. A system for transmitting future electronic content to an intended recipient, said system comprising:
at least device operatively configured with a data network,
a user interface operatively linked to said at least one device,
said user interface configured to allow access to a main user to create at least a first electronic content element,
said user interface configured to implement a transmission scheme of said at least first electronic content element based upon the occurrence of a future condition.

2. The system as recited in claim 1 wherein said future condition comprises a personal event of the main user.

3. The system as recited in claim 1 wherein said future condition comprises a personal event of the intended recipient.

4. The system as recited in claim 1 wherein said future condition comprises the occurrence of a known future event.

5. The system as recited in claim 1 wherein said future condition comprises the occurrence of a known future date.

6. The system as recited in claim 1 wherein said future condition comprises the occurrence of an unknown future event.

7. The system as recited in claim 1 wherein said at least one device and structured to obtain personal information from the main user,
said user interface configured to interpret the personal information of the main user and create an electronic content database comprising at least said first electronic content element.

8. The system as recited in claim 7 wherein said electronic content database comprises instructions for creating electronic content.

9. The system as recited in claim 8 wherein said transmission scheme comprising said user interface being configured to transmit said instructions for creating electronic content to a third-party intermediary.

10. The system as recited in claim 9 wherein said user interface is structured to obtain personal information from the third-party intermediary.

11. The system as recited in claim 10 wherein said user interface is structured to interpret the personal information from the third-party intermediary; said electronic content database structured to include at least a second electronic content element.

12. The system as recited in claim 11 wherein said transmission scheme comprises transmitting said at least second electronic content element to the intended recipient.

13. A method for transmitting future electronic content to an intended recipient, the method comprising:
using a user interface operatively linked to at least one device to obtain and interpret personal information from a main user,
using the user interface to interpret the personal information obtained from the main user,
creating an electronic content database comprising at least a first electronic content element, and
implementing a transmission scheme of the at least first electronic content element upon the occurrence of a future condition.

14. The method as recited in claim 13 wherein implementing the transmission scheme comprises initially encrypting the at least first electronic content element, and subsequently decrypting the at least first electronic content element.

15. The method as recited in claim 14 wherein implementing the transmission scheme comprises subsequently decrypting the at least first electronic content element upon the occurrence of the future condition.
